(19) Europäisches Patentamt
European Patent Office
Office européen des brevets

(11) **EP 1 514 139 B1**

(12) **FASCICULE DE BREVET EUROPEEN**

(45) Date de publication et mention
de la délivrance du brevet:
**07.05.2008 Bulletin 2008/19**

(51) Int Cl.:
*G01V 1/30* *(2006.01)*    *G01V 1/28* *(2006.01)*

(21) Numéro de dépôt: **03760723.1**

(22) Date de dépôt: **11.06.2003**

(86) Numéro de dépôt international:
**PCT/FR2003/001755**

(87) Numéro de publication internationale:
**WO 2004/001451 (31.12.2003 Gazette 2004/01)**

(54) **PROCEDE, DISPOSITIF ET PRODUIT-PROGRAMME DE LISSAGE D UNE PR    OPRIETE DE SUBSURFACE**

VERFAHREN, EINRICHTUNG UND SOFTWAREPAKET ZUR GLÄTTUNG EINER UNTEROBERFLÄCHENEIGENSCHAFT

METHOD, DEVICE AND SOFTWARE PACKAGE FOR SMOOTHING A SUBSURFACE PROPERTY

(84) Etats contractants désignés:
**AT BE BG CH CY CZ DE DK EE ES FI FR GB GR HU IE IT LI LU MC NL PT RO SE SI SK TR**

(30) Priorité: **19.06.2002 FR 0207597**

(43) Date de publication de la demande:
**16.03.2005 Bulletin 2005/11**

(73) Titulaire: **Earth Decisions Sciences
54500 Vandoeuvre-les-Nancy (FR)**

(72) Inventeurs:
• **DULAC, Jean-Claude
Sugarland, TX 77479 (US)**
• **BOSQUET, Fabien
F-54000 Nancy (FR)**
• **LABRUNYE, Emmanuel
F-54000 Nancy (FR)**

(74) Mandataire: **Laget, Jean-Loup
Cabinet LOYER
161, rue de Courcelles
75017 Paris (FR)**

(56) Documents cités:
**US-A- 4 672 546        US-A- 5 615 171
US-A- 5 930 730        US-A- 6 138 076
US-A- 6 151 555        US-A1- 2002 022 930**

**Description**

L'invention est relative à un procédé de lissage d'une propriété de subsurface dans une structure géologique représentée par des mesures sismiques.

L'invention est également relative à un dispositif de lissage d'une propriété de subsurface dans une structure géologique représentée par des mesures sismiques.

L'invention est enfin relative à un produit-programme d'ordinateur permettant le fonctionnement d'un dispositif programmable de lissage d'une propriété de subsurface dans une structure géologique représentée par des mesures sismiques.

Le document WO 01/63323 A1 décrit un procédé de traitement de données sismiques comprenant les étapes consistant à : obtenir un volume de données sismiques couvrant un volume prédéterminé de terre ; déterminer pour chaque voxel du volume de données sismiques l'orientation locale des données sismiques ; déterminer pour chaque voxel s'il existe un bord dans le voisinage, et exécuter une opération de lissage sur chaque voxel dans le volume de données sismiques, dans lequel la direction de l'opération de lissage est l'orientation locale des données, et dans lequel l'opération de lissage ne dépasse pas le bord, de manière à obtenir un volume de données sismiques traitées, où la quantité associée à chaque voxel dans le volume de donnés traitées est le résultat obtenu par l'exécution de l'opération de lissage dans le voxel dans le volume de données sismiques.

Le document WO 02/13139 A1 décrit un procédé de traitement d'images sismiques comprenant les étapes : obtenir un ensemble de données d'une image initiale bidimensionnelle ou tridimensionnelle, dans lequel chaque élément de l'ensemble de données est l'intensité initiale d'image du point de l'image ; calculer pour chaque point les dérivées partielles de l'élément dans n directions pour obtenir un ensemble de valeurs dérivé des dérivées partielles; calculer pour chaque point une matrice carrée structurale symétrique à partir des valeurs des dérivées partielles; effectuer une itération point à point pondérée par une variable voisine de zéro lorsque le point est voisin d'un bord et voisine de 1 lorsqu'il est très éloigné d'un bord ; et répéter ces étapes un nombre de fois pour obtenir l'image traitée.

Le document US 5615171 décrit un procédé et un dispositif pour trouver des horizons dans des données sismiques tridimensionnelles, comportant des étapes selon le préambule de la revendication 1.

Un premier but de l'invention est d'améliorer le lissage des propriétés de subsurface dans une structure géologique représentée par des mesures sismiques.

Un deuxième but de l'invention est de permettre un lissage simple et rapide des propriétés de subsurface, tout en ne lissant pas les discontinuités.

L'invention a pour objet un procédé de lissage, conformément à la revendication 1, d'une propriété de subsurface dans une structure géologique représentée par mesures sismiques, dans lequel on construit une fonction continue $S_{ij,k}$(t) par interpolation ou approximation des traces sismiques discrètes d'une matrice sismique multidimensionnelle, ladite fonction étant désignée comme "trace sismique locale continue", comportant les étapes suivantes :

    a). utiliser comme décalage optimal $h_{ij,pq,k}$ de deux traces sismiques locales continues voisines $S_{ij,k}$(t) et $S_{pq,k}$(t), la valeur de décalage rendant maximale leur fonction de corrélation ;

    b) retenir comme voisinage conditionnel d'une trace sismique locale continue "centrale" $S_{ij,k}$(t) le sous-voisinage consistant en des traces voisines $S_{pq,k}$(t) correspondant à des décalages optimaux $h_{ij,pq,k}$ associés à des corrélations $R_{ij,pq,k}$($h_{ij,pq,k}$ supérieures à un seuil prédéterminé compris entre 0 et 1 ;

caractérisé par le fait que le procédé comporte en outre les étapes suivantes:

    c). choisir une propriété de subsurface à lisser au voisinage conditionnel d'un point (i, j, k) d'une trace sismique locale continue "centrale" de référence ;

    d). décaler les propriétés de subsurface du voisinage conditionnel en translatant la variable courante de la valeur du décalage optimal $h_{ij,pq,k}$;

    e). prendre comme valeur lissée au point (i, j, k) une moyenne des propriétés de subsurface décalées à l'étape d).

Selon d'autres caractéristiques de l'invention :

- la moyenne des propriétés de surface de l'étape e) est une moyenne qui peut être pondérée, par exemple par la valeur de corrélation maximale correspondant au décalage optimal,

- la moyenne des propriétés de subsurface de l'étape e) est choisie dans l'ensemble suivant : moyenne arithmétique, moyenne géométrique, moyenne harmonique,

- on choisit comme propriété de subsurface à lisser l'amplitude réfléchie et captée par des géophones,

- si nécessaire, l'ensemble du processus de lissage est répété un certain nombre de fois pour améliorer le lissage,

- on visualise des coupes de matrice multidimensionnelle de propriété lissée sur un écran de visualisation.

L'invention a également pour objet un dispositif selon la revendication 7, pour la mise en oeuvre du procédé selon l'invention, comportant des moyens pour utiliser comme décalage optimal de deux traces sismiques locales continues voisines la valeur de décalage rendant maximale leur fonction de corrélation, des moyens pour retenir comme voisinage conditionnel d'une trace sismique locale continue"centrale" $S_{ij,k}(t)$ le sous-voisinage consistant en des traces voisines $S_{pq,k}(t)$ correspondant à des décalages optimaux associés à des corrélations $R_{ij,pq,k}(h)$ supérieures à un seuil prédéterminé compris entre 0 et 1 **caractérisé par le fait que** le dispositif comporte en outre des moyens pour choisir une propriété de subsurface à lisser au voisinage conditionnel d'un point (i, j, k) d'une trace sismique locale continue "centrale" de référence, des moyens pour décaler les propriétés de subsurface du voisinage conditionnel en translatant la variable courante de la valeur du décalage optimal $h_{ij,pq,k}$ et des moyens pour prendre comme valeur lissée au point (i, j, k) une moyenne des propriétés de subsurface décalées par les moyens pour décaler les propriétés de subsurface du voisinage conditionnel.

Selon d'autres caractéristiques de l'invention :

- le dispositif comporte des moyens de mémorisation et des moyens de visualisation de paramètres sismiques déterminés à l'aide du procédé selon l'invention.

L'invention a enfin pour objet un produit-programme d'ordinateur, selon la revendication 9, comportant des éléments de code de programme pour exécuter les étapes d'un procédé selon l'invention, lorsque ledit programme est exécuté par un ordinateur.

L'invention sera mieux comprise grâce à la description qui va suivre donnée à titre d'exemple non limitatif en référence aux dessins annexés dans lesquels :

- La figure 1 représente schématiquement une matrice sismique tridimensionnelle et une trace sismique locale continue.

- La figure 2 représente schématiquement, un exemple de voisinage local $N_{ij,k}$ consistant en un ensemble de trace sismique locale continues $S_{pq,k}(t)$ voisines de la trace centrale de référence $S_{ij,k}(t)$ elle même située a la verticale du géophone $G_{ij}$ et interpolant les amplitudes sismiques autour de t=k.

- La figure 3 représente schématiquement, une section verticale de voisinage local conditionnel $N_{ij,k}(r)$ d'une trace sismique locale continue de référence $S_{ij,k}(t)$.

- La figure 4 représente schématiquement, une section verticale d'une matrice sismique tridimensionnelle avec un décalage optimal $h_{ij,pq,k}$ et un voisinage conditionnel $N_{ij,k}(r)$.

- La figure 5 représente schématiquement, une section verticale d'une matrice sismique tridimensionnelle analogue à la figure 4 avec présence d'une faille ou discontinuité

- La figure 6 représente schématiquement, un organigramme fonctionnel d'un procédé selon l'invention.

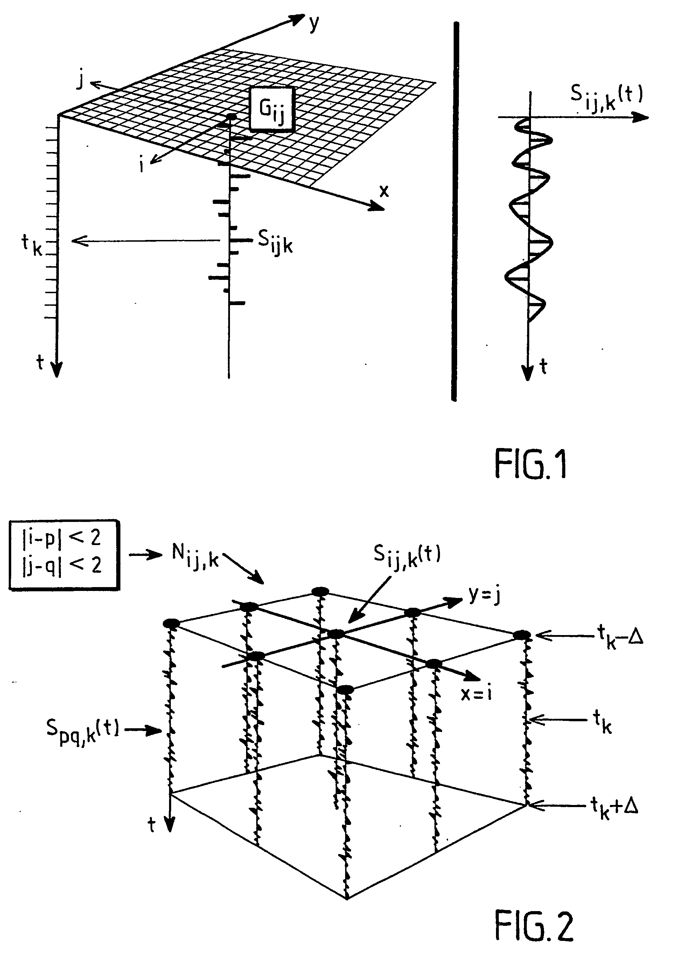

En référence aux figures 1 à 5, les éléments identiques ou fonctionnellement équivalents sont désignés ou repérés de manière identique.

Sur la figure 1, une matrice sismique tridimensionnelle est obtenue par relevé de mesures enregistrées par des géophones $G_{ij}$ disposés sur un réseau x,y en des points de coordonnées i, j. Le relevé des mesures échantillonnées dans le temps est représenté suivant un axe t descendant représentatif de la profondeur ou d'une verticale descendante à partir de la surface de la terre ou de la mer. Les mesures sont caractérisées par leur amplitude, par exemple une amplitude relevée par le géophone $G_{ij}$ au temps ou à la profondeur d'échantillonnage $t_k$. La mesure discrète effectuée par le géophone $G_{ij}$ au temps ou à la profondeur $t_k$ est appelée amplitude sismique $S_{ij,k}$.

L'ensemble des amplitudes sismiques correspondant à un géophone $G_{ij}$ de coordonnées i, j est une matrice unidimensionnelle $(S_{ij1}, S_{ij2},....., S_{ijk},...., S_{ijN})$ appelées trace sismique discrète, car cette matrice unidimensionnelle correspond à la trace selon le point de coordonnées horizontales i, j de la matrice sismique tridimensionnelle obtenue par mesures sismiques.

L'axe vertical t orienté selon une verticale descendante désigne usuellement le temps, mais peut également être traité pour représenter une profondeur à partir de la surface.

L'invention concerne aussi bien l'application à une troisième coordonnée t représentative du temps, qu'à une troisième coordonnée t représentative de la profondeur.

A partir de la trace sismique discrète située à la verticale d'un géophone $G_{ij}$ on définit, par interpolation ou approximation des valeurs discrètes autour de $t=t_k=k$, une fonction continue $S_{ij,k}(t)$ qui est désignée comme "trace sismique locale continue". Les méthodes d'approximation ou d'interpolation de valeurs discrètes pour engendrer une fonction continue sont nombreuses, et comprennent notamment les interpolations ou approximations polynomiales, ainsi que les interpolations ou approximations trigonométriques polynomiales.

Toute autre variante d'interpolation ou d'approximation fournissant une fonction continue peut également être appliquée à la présente invention pour fournir une "trace sismique locale continue".

Sur la figure 2, plusieurs traces sismiques locales continues définissent un exemple de voisinage d'une trace sismique locale continue "centrale" $S_{ij,k}(t)$ de référence. Le voisinage d'une trace sismique locale continue $S_{ij,k}(t)$ est défini comme l'ensemble des traces sismiques locales continues dont les indices spatiaux horizontaux p,q sont voisins des indices spatiaux horizontaux i, j de la trace sismique locale continue de référence.

A titre d'exemple, les coordonnées spatiales horizontales p,q correspondant au géophone $G_{pq}$ sont voisines des coordonnées spatiales horizontales i, j correspondant au géophone $G_{ij}$ si les valeurs absolues des différences i-p et j-q sont inférieures à des entiers donnés, par exemple à 2.

Dans ce cas, comme représenté à la figure 2, la trace sismique locale continue $S_{ij,k}(t)$ est associée à huit traces sismiques locales continues voisines entourant la trace sismique locale continue "centrale" $S_{ij,k}(t)$.

Dans le cas de traces sismiques locales continues produites par des mesures sismiques, le profil des horizons géologiques introduit des décalages verticaux entre des traces sismiques locales continues voisines. Dans le but de déterminer des relations entre deux traces sismiques continues locales voisines $S_{ij,k}(t)$ et $S_{pq,k}(t)$ centrées sur la même coordonnée verticale d'échantillonnage $t=t_k=k$ et correspondant à des coordonnées spatiales i, j et p,q différentes, on calcule la fonction de corrélation $R_{ij,pq,k}(h)$ des deux traces sismiques locales continues.

La fonction de corrélation de deux traces sismiques locales continues voisines est obtenue par la formule suivante

$$R_{ij,pq,k}(h) = \frac{C_{ij,pq,k}(h)}{\sqrt{C_{ij,ij,k}(0) . C_{pq,pq,k}(0)}}$$

où le numérateur correspond à la fonction de covariance de $S_{ij,k}(t)$ et $S_{pq,k}(t)$ obtenue par l'expression suivante

$$C_{ij,pq,k}(h) = \int_{tk-\Delta}^{tk+\Delta} S_{ij,k}(t) . S_{pq,k}(t+h) . dt .$$

Dans cette intégrale définissant $C_{ij,pq,k}(h)$, le paramètre $\Delta$ définit une « fenêtre verticale d'investigation » autour de $t=t_k=k$.

Par exemple, si les traces sismiques locales continues $S_{ij,k}(t)$ et $S_{pq,k}(t)$ sont des polynômes trigonométriques de la forme suivante interpolant les donnés sismiques

$$S_{ij,k}(t) = \sum_{s=1}^{m} a_s^{ij,k} . \cos(s\omega t) + b_s^{ij,k} . \sin(s\omega t)$$

$$S_{ij,k}(t) = \sum_{s=1}^{m} a_s^{ij,k} . \cos(s\omega t) + b_s^{ij,k} . \sin(s\omega t)$$

alors on peut montrer que la fonction de covariance $C_{ij,pq,k}(h)$ est elle même un polynôme trigonométrique de la forme suivante où les coefficients $A_s^{ij,pq,k}$ et $B_s^{ij,pq,k}$ dépendent des coefficients $a_s^{ij,k}$, $a_s^{pq,k}$, $b_s^{ij,k}$ et $b_s^{pq,k}$ :

$$C_{ij,pq,k}(h) = \sum_{s=1}^{m} A_s^{ij,pq,k} . \cos(s\omega h) + B_s^{ij,pq,k} . \sin(s\omega h)$$

Un résultat mathématique classique et connu est que la fonction de corrélation

$$R_{ij,pq,k}(h) \quad = \quad \frac{C_{ij,pq,k}(h)}{\sqrt{C_{ij,ij,k}(0).C_{pq,pq,k}(0)}}$$ traduit une similarité des fonctions corrélées lorsque cette fonction de corrélation se rapproche de 1.

L'étude des fonctions de corrélation des traces sismiques locales continues $S_{ij,k}(t)$ et $S_{pq,k}(t)$ permet de définir comme décalage optimal la valeur $h_{ij,pq,k}$ de h correspondant au maximum de la fonction de corrélation $R_{ij,pq,k}(h)$ , c'est-à-dire au maximum de la fonction de corrélation le plus proche de 1. Contrairement à l'art existant basé sur une formulation discrète de la fonction de corrélation $R_{ij,pq,k}(h)$, l'utilisation d'une formulation continue des traces sismiques et donc de la fonction de corrélation permet d'obtenir un décalage optimum qui n'est pas contraint à être un multiple entier du pas d'échantillonnage suivant l'axe vertical correspondant à la variable t.

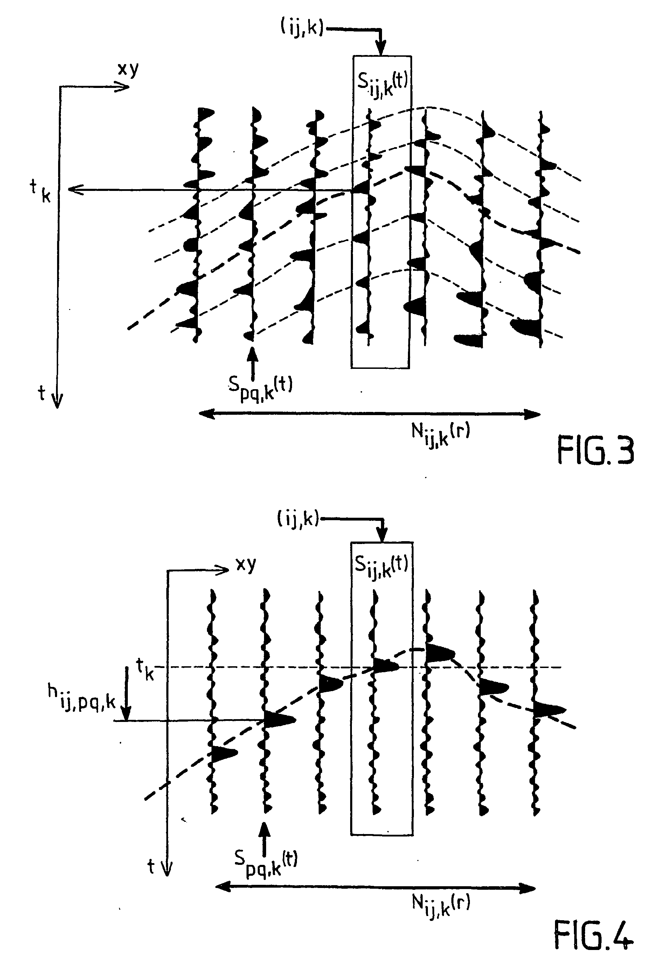

La définition du décalage optimal $h_{ij,pq,k}$ de deux traces sismiques locales continues voisines permet d'obtenir une première approximation des horizons passant par cette trace sismique locale continue de référence $S_{ij,k}(t)$, comme représenté aux figures 3 à 5. Contrairement à l'art existant, le fait d'utiliser des décalages optimaux qui ne sont pas contraint à être un multiple entier du pas d'échantillonnage suivant l'axe vertical permet d'éviter des erreurs connues sous le nom « d'aliasing ».

Sur ces figures 3 à 5, on définit un voisinage conditionnel $N_{ij,k}(r)$ de la trace sismique continue locale de référence $S_{ij,k}(t)$ qui est un sous-voisinage du voisinage initial des traces sismiques locales continues retenues pour le calcul de corrélation et de définition des décalages optimaux. Le voisinage conditionnel $N_{ij,k}(r)$ est choisi de manière que, pour toute trace sismique continue locale $S_{pq,k}(t)$ appartenant à $N_{ij,k}(r)$, le décalage optimal $h_{ij,pq,k}$ correspondant est tel que la corrélation $R_{ij,pq,k}(h_{ij,pq,k})$ entre $S_{ij,k}(t)$ et $S_{pq,k}(t)$ est supérieure à un seuil prédéterminé r compris entre 0 et 1.

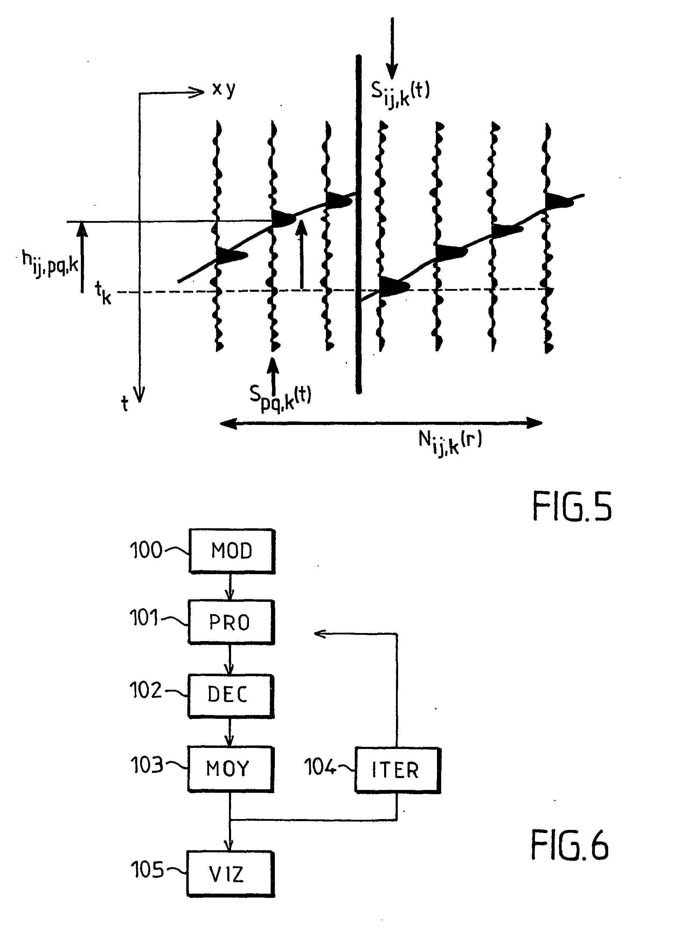

Comme on le voit sur la figure 5, la fixation du seuil r permet également d'englober dans un voisinage conditionnel une discontinuité ou une faille géologique, ce qui constitue un avantage important par rapport à l'art antérieur.

Les dispositions précitées fournissent ainsi une modélisation continue permettant la mise en oeuvre de l'invention.

En référence à la figure 6, un procédé de lissage ou propriété de subsurface dans une structure géologique représenté par des mesures sismiques comporte une première étape 100 de modélisation numérique, comme décrit en référence aux figures 1 à 5, pour définir des traces sismiques locales continues d'une matrice sismique multidimensionnelle, calculer les décalages optimaux de traces sismiques locales continues voisines et définir les voisinages conditionnels des traces sismiques locales continues "centrales" de référence.

Après cette première étape 100 de modélisation numérique, une étape 101 permet de choisir la propriété à lisser sur un voisinage conditionnel. Cette propriété à lisser sur un voisinage conditionnel peut consister en toute fonction multidimensionnelle de la subsurface à analyser.

En particulier, la propriété à lisser peut simplement consister en l'amplitude du signal sismique réfléchi par les horizons de la subsurface en direction des géophones de mesure.

A l'étape 102, on remplace les propriétés du voisinage conditionnel par les propriétés décalées de la valeur du décalage optimal $h_{ij,pq,k}$, de manière à constituer un ensemble de propriétés relatives au même horizon.

Ainsi, dans le cas d'une trace locale sismique continue centrale de référence $S_{ij,k}(t)$, on remplace toutes les valeurs $S_{pq,k}(t)$ du voisinage conditionnel par les valeurs $S_{pq,k}(t+h_{ij,pq,k})$.

On effectue ensuite à l'étape 103 une moyenne des valeurs décalées $S_{pq,k}(t+h_{ij,pq,k})$ établies à l'étape 102 et on choisit comme valeur de la propriété au point de coordonnées spatiales ij et de coordonnée temporelle ou de profondeur $t=t_k=k$, la moyenne ainsi calculée.

L'invention s'applique à plusieurs variantes d'établissement de moyennes : on peut par exemple utiliser une moyenne pondérée ou non pondérée ; ou, alternativement, on peut également utiliser une moyenne arithmétique, une moyenne géométrique, une moyenne harmonique, pondérée ou non pondérée.

Dans le cas d'une moyenne pondérée, ont peut avantageusement utiliser comme facteur de pondération la valeur maximale de la fonction de corrélation

$R_{ij,pq,k}(h_{ij,pq,k})$, en reflétant ainsi le degré de confiance accordable à chaque décalage optimal correspondant à un maximum d'une fonction de corrélation.

Le procédé de lissage ou de filtrage d'une propriété selon la présente invention permet ainsi d'améliorer le contraste et la précision des propriétés de subsurface dans une matrice sismique multidimensionnelle.

Si nécessaire, afin d'améliorer le lissage, l'ensemble du processus décrit par la presente invention peut être répété sur le lissage obtenu lors d'une iteration précédente. L'étape 104 constitue une étape itérative dans laquelle l'opérateur peut définir le nombre d'itérations adequates à la résolution de son problème.

L'invention est de préférence mise en oeuvre sur un dispositif comportant des moyens pour accomplir successivement les étapes du procédé décrit en référence à la figure 6.

En particulier, ce dispositif comporte des moyens de visualisation des paramètres sismiques ou propriétés obtenues à l'étape 105 et des moyens de mémorisation de programme et de calculs intermédiaires.

De préférence, ce dispositif est un dispositif programmable commandé par un produit-programme d'ordinateur, réalisé pour mettre en oeuvre un procédé selon l'invention.

**Revendications**

1. Procédé de lissage d'une propriété de subsurface dans une structure géologique représentée par mesures sismiques, dans lequel on construit une fonction continue $S_{ij,k}(t)$ par interpolation ou approximation des traces sismiques discrètes d'une matrice sismique multidimensionnelle, ladite fonction $S_{ij,k}(t)$ étant désignée comme "trace sismique locale continu", comportant les étapes suivantes :

   a). utiliser comme décalage optimal de deux traces sismiques locales continues voisines $S_{ij,k}(t)$ et $S_{pq,k}(t)$, la valeur de décalage rendant maximale leur fonction de corrélation, ce décalage optimal n'étant pas contraint à être un multiple entier du pas d'échantillonnage vertical ;
   b). retenir comme voisinage conditionnel d'une trace sismique locale continue "centrale" $S_{ij,k}(t)$ le sous-voisinage consistant en des traces voisines $S_{pq,k}(t)$ correspondant à des décalages optimaux associés à des corrélations $R_{ij,pq,k}(h)$ supérieures à un seuil prédéterminé compris entre 0 et 1 ;
   **caractérisé par le fait que** le procédé comporte en outre les étapes suivantes :
   c). choisir une propriété de subsurface à lisser au voisinage conditionnel d'un point (i, j, k) d'une trace sismique locale continue "centrale" de référence ;
   d). décaler les propriétés de subsurface du voisinage conditionnel en translatant la variable courante de la valeur du décalage optimal ($h_{ij,pq,k}$) ;
   e). prendre comme valeur lissée au point (i, j, k) une moyenne des propriétés de subsurface décalées à l'étape d).

2. Procédé selon la revendication 1, dans lequel la moyenne des propriétés de surface de l'étape e) est une moyenne pondérée, par exemple par la valeur de corrélation maximale correspondant au décalage optimal.

3. Procédé selon la revendication 1 ou 2, dans lequel la moyenne des propriétés de subsurface de l'étape e) est choisie dans l'ensemble suivant : moyenne arithmétique, moyenne géométrique, moyenne harmonique pondérée ou non.

4. Procédé selon la revendication 1, dans lequel on choisit comme propriété de subsurface à lisser, l'amplitude réfléchie et captée par des géophones.

5. Procédé selon l'une quelconque des revendications précédentes, dans lequel on itère le procéssus de lissage en l'appliquant sur le résultat d'un lissage antérieur.

6. Procédé selon la revendication 1 ou la revendication 5, dans lequel on visualise une matrice multidimensionnelle de propriété lissée sur un écran de visualisation.

7. Dispositif pour la mise en oeuvre du procédé selon l'une quelconque des revendications 1 à 4, comportant des moyens pour utiliser comme décalage optimal de deux traces sismiques locales continues voisines la valeur $h_{ij,pq,k}$ de décalage rendant maximale leur fonction de corrélation, des moyens pour retenir comme voisinage conditionnel d'une trace sismique locale continue"centrale" $S_{ij,k}(t)$ le sous-voisinage consistant en des traces voisines $S_{pq,k}(t)$ correspondant à des décalages optimaux associés à des corrélations $R_{ij,pq,k}(h)$ supérieures à un seuil prédéterminé compris entre 0 et 1 **caractérisé par le fait que** le dispositif comporte en outre des moyens pour choisir une propriété de subsurface à lisser au voisinage conditionnel d'un point (i, j, k) d'une trace sismique locale continue "centrale" de référence, des moyens pour décaler les propriétés de subsurface du voisinage conditionnel en translatant la variable courante de la valeur du décalage optimal $h_{ij,pq,k}$ et des moyens pour prendre comme valeur lissée au point (i, j, k) une moyenne des propriétés de subsurface décalées par les moyens pour décaler les propriétés de subsurface du voisinage conditionnel.

8. Dispositif selon la revendication 7, comportant des moyens de mémorisation et des moyens de visualisation de paramètres sismiques déterminés à l'aide du procédé selon l'une quelconque des revendications 1 à 6.

9. Produit-programme d'ordinateur, comportant des éléments de code de programme pour exécuter les étapes du procédé selon l'une quelconque des revendications 1 à 5, lorsque ledit programme est exécuté par un ordinateur.

**Claims**

1. Method for smoothing a subsurface property in a geological structure represented by seismic measurements, in which a continuous function $S_{ij,k}(t)$ is constructed by interpolation or approximation of the discrete seismic traces of a multidimensional seismic matrix, said function $S_{ij,k}(t)$ being designated a "continuous local seismic trace", comprising the following steps:

   a) using, as the optimum offset of two adjacent continuous local seismic traces $S_{ij,k}(t)$ and $S_{pq,k}(t)$, the offset value which maximises their correlation function, this optimum offset not necessarily being restricted to being a whole multiple of the vertical sampling interval;
   b) using, as the conditional neighbourhood of a "central" continuous local seismic trace $S_{ij,k}(t)$, the sub-neighbourhood consisting of adjacent traces $S_{pq,k}(t)$ which correspond to optimum offsets associated with correlations $R_{ij,pq,k}(h)$ greater than a predetermined threshold between 0 and 1;
   **characterised in that** the method further comprises the following steps:
   c) selecting a subsurface property to be smoothed in the conditional neighbourhood of a point (i, j, k) of a reference "central" continuous local seismic trace;
   d) offsetting the subsurface properties of the conditional neighbourhood by translating the current variable of the optimum offset value ($h_{ij,pq,k}$);
   e) taking, as the smoothed value at the point (i, j, k), an average of the subsurface properties offset in step d).

2. Method according to claim 1, in which the average of the surface properties of step e) is a weighted average, weighted for example by the maximum correlation value corresponding to the optimum offset.

3. Method according to either claim 1 or claim 2, in which the average of the subsurface properties in step e) is selected from the following set: arithmetic mean, geometric mean, harmonic mean, weighted or otherwise.

4. Method according to claim 1, in which the amplitude reflected and detected by geophones is selected as the subsurface property to be smoothed.

5. Method according to any one of the preceding claims, in which the smoothing method is iterated by applying it to the result of a prior smoothing.

6. Method according to either claim 1 or claim 5, in which a multi-dimensional matrix of smoothed property is displayed on a display screen.

7. Device for carrying out the method according to any one of claims 1 to 4, comprising means for using, as the optimum offset of two adjacent continuous local seismic traces, the offset value $h_{ij,pq,k}$ which maximises their correlation function, and means for using, as the conditional neighbourhood of a "central" continuous local seismic trace $S_{ij,k}(t)$, the sub-neighbourhood consisting of adjacent traces $S_{pq,k}(t)$ which correspond to optimum offsets associated with correlations $R_{ij,pq,k}(h)$ greater than a predetermined threshold between 0 and 1, **characterised in that** the device further comprises means for selecting a property of the subsurface to be smoothed in the conditional neighbourhood of a point (i, j,k) of a reference "central" continuous local seismic trace, means for offsetting the subsurface properties of the conditional neighbourhood by translating the current variable of the optimum offset value $h_{ij,pq,k}$, and means for taking, as the smoothed value at the point (i, j, k), an average of the subsurface properties which have been offset by the means for offsetting the subsurface properties of the conditional neighbourhood.

8. Device according to claim 7, comprising means for memorising and means for displaying seismic parameters determined by means of the method according to any one of claims 1 to 6.

9. Computer software package, comprising elements of program code to perform the steps of the method according to any one of claims 1 to 5 when said program is executed by a computer.

**Patentansprüche**

1. Verfahren zur Glättung einer Teilflächeneigenschaft in einer durch seismische Messungen dargestellten geologischen Struktur, bei dem man eine zusammenhängende Funktion $S_{ij,k}(t)$ durch Interpolation oder Näherung der diskreten seismischen Spuren einer mehrdimensionalen seismischen Matrix konstruiert, wobei die Funktion $S_{ij,k}(t)$

als "zusammenhängende lokale seismische Spur" bezeichnet wird und das Verfahren folgende Schritte umfaßt:

a) Einsetzen des Verschiebungswertes, der die Korrelationsfunktion zweier benachbarter, zusammenhängender lokaler seismischer Spuren $S_{ij,k}(t)$ und $S_{pq,k}(t)$ maximal werden läßt, als deren optimale Verschiebung, wobei diese optimale Verschiebung nicht auf ein ganzzahliges Vielfaches des vertikalen Tastabstandes beschränkt ist;
b) Verwenden der Teilumgebung, die aus benachbarten Spuren $S_{pq,k}(t)$ besteht, welche optimalen Verschiebungen entsprechen, denen Korrelationen $R_{ij,pq,k}(h)$ zugeordnet sind, welche größer als ein vorbestimmter Schwellwert im Bereich von 0 bis 1 sind, als eingeschränkte Umgebung einer "zentralen" zusammenhängenden lokalen seismischen Spur $S_{ij,k}(t)$;
**dadurch gekennzeichnet, daß** das Verfahren ferner die folgenden Schritte umfaßt:
c) Wählen einer zu glättenden Teilflächeneigenschaft eines Punktes (i, j, k) einer "zentralen" zusammenhängenden lokalen seismischen Referenzspur in der eingeschränkten Umgebung;
d) Verschieben der Teiloberflächeneigenschaften der eingeschränkten Umgebung durch Translation der aktuellen Variablen des Wertes der optimalen Verschiebung ($h_{ij,pq,k}$);
e) Verwenden eines Mittelwertes der im Schritt d) verschobenen Teilflächeneigenschafte als geglätteter Wert am Punkt (i, j, k).

2. Verfahren nach Anspruch 1, bei dem der Mittelwert der Flächeneigenschaften des Schrittes e) ein beispielsweise mit dem der optimalen Verschiebung entsprechenden, maximalen Korrelationswert gewichteter Mittelwert ist.

3. Verfahren nach Anspruch 1 oder 2, bei dem der Mittelwert der Teilflächeneigenschaften des Schrittes e) aus der folgenden Gruppe ausgewählt ist: arithmetisches Mittel, geometrisches Mittel, gegebenenfalls gewichtetes harmonisches Mittel.

4. Verfahren nach Anspruch 1, bei dem man als zu glättende Teilflächeneigenschaft die reflektierten und mittels Geophonen erfaßten Amplituden wählt.

5. Verfahren nach einem der vorhergehenden Ansprüche, bei dem man den Glättungsvorgang wiederholt, indem man ihn auf das Ergebnis einer vorhergehenden Glättung anwendet.

6. Verfahren nach Anspruch 1 oder Anspruch 5, bei dem man eine mehrdimensionale Matrix mit geglätteter Eigenschaft auf einem Anzeigebildschirm darstellt.

7. Vorrichtung zur Durchführung des Verfahrens nach einem der Ansprüche 1 bis 4, mit Mitteln, um als optimale Verschiebung zweier benachbarter zusammenhängender lokaler seismischer Spuren den Verschiebungswert $h_{ij,pq,k}$ einzusetzen, der deren Korrelationsfunktion maximal werden läßt, Mitteln, um die Teilumgebung, die aus benachbarten Spuren $S_{pq,k}(t)$ besteht, welche optimalen Verschiebungen entsprechen, denen Korrelationen $R_{ij,pq,k}(h)$ zugeordnet sind, welche größer als ein vorbestimmter Schwellwert im Bereich von 0 bis 1 sind, als eingeschränkte Umgebung einer "zentralen" zusammenhängenden lokalen seismischen Spur $S_{ij,k}(t)$ zu verwenden, **dadurch gekennzeichnet, daß** die Vorrichtung ferner umfaßt: Mittel zum Wählen einer zu glättenden Teilflächeneigenschaft eines Punktes (i, j, k) einer "zentralen" zusammenhängenden lokalen seismischen Referenzspur in der eingeschränkten Umgebung, Mittel zum Verschieben der Teiloberfiächeneigenschaften der eingeschränkten Umgebung durch Translation der aktuellen Variablen des Wertes der optimalen Verschiebung $h_{ij,pq,k}$ und Mittel zum Verwenden eines Mittelwertes der von den Mitteln zum Verschieben der Teilflächeneigenschaften der eingeschränkten Umgebung verschobenen Teilflächeneigenschaften als geglätteter Wert am Punkt (i, j, k).

8. Vorrichtung nach Anspruch 7, mit Mitteln zur Speicherung und Mitteln zur Anzeige von seismischen Parametern, die mit Hilfe des Verfahrens nach einem der Ansprüche 1 bis 6 ermittelt wurden.

9. Computerprogrammprodukt mit Programmcode-Elementen zum Ausführen der Schritte des Verfahrens nach einem der Ansprüche 1 bis 5 bei der Ausführung des Programms auf einem Computer.

FIG.1

FIG.2

$(ij,k)$

xy

$S_{ij,k}(t)$

$t_k$

$S_{pq,k}(t)$

t

$N_{ij,k}(r)$

FIG.3

$(ij,k)$

xy

$S_{ij,k}(t)$

$t_k$

$h_{ij,pq,k}$

$S_{pq,k}(t)$

t

$N_{ij,k}(r)$

FIG.4

$xy$

$S_{ij,k}(t)$

$h_{ij,pq,k}$

$t_k$

$t$

$S_{pq,k}(t)$

$N_{ij,k}(r)$

FIG.5

100 — MOD

101 — PRO

102 — DEC

103 — MOY

104 — ITER

105 — VIZ

FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0163323 A1
- WO 0213139 A1
- US 5615171 A